# EUROPÄISCHE PATENTANMELDUNG

(11) **EP 4 838 503 A1**
(43) Veröffentlichungstag der Anmeldung: **11.11.2026**
(21) Anmeldenummer: 26025010.5
(22) Anmeldetag: 13.04.2026
(51) Int. Cl.: G08G 1/16, A01K 27/00

(54) **KOLLISIONSWARNGERÄT UND VERFAHREN ZUR REDUKTION VON KOLLISIONSWAHRSCHEINLICHKEITEN**

(30) Priorität: 13.04.2025 CH 3742025; 12.05.2025 DE 102025001853
(71) Anmelder: Ventarix GmbH, 8807 Freienbach (CH)
(72) Erfinder: Die Erfindernennung liegt noch nicht vor

(57) **Zusammenfassung**

Das Kollisionswarngerät beinhaltet einen Nahbereichsdetektor 365, eine Analyseeinheit 369 und eine Signalisierungseinrichtung 373.

Der Nahbereichsdetektor 365 setzt sich aus Signalempfang 367 und vorgelagerten Detektionseinrichtungen (z. B. die Umfeldsensoren, z. B. die Kamera 359, z. B. das Mikrophone, z. B. die Vibrationsmessvorrichtung) zusammen. Die von dem Signalempfang 367 erfassten Signale werden der Analyseeinheit 369 zur Verfügung gestellt, die einen Filter 371 umfasst. Der Filter sortiert die Signale des Signalempfangs 367 aus und leitet die drohende Gefahr an die Signalisierungseinrichtung 373 weiter. Die Signale werden anschliessend an das Lebewesen 311, seinen Halter übers mobile Kommunikationsgerät 331 und die Insassen des Fahrzeugs 321 übermittelt. Der Halter kann zudem nach dem Empfang der Signale übers Kommunikationsgerät 331 das Lebewesen vor der Gefahr warnen 397.

## Beschreibung

Die vorliegende Erfindung behandelt ein Kollisionswarngerät, mit dem Unfallwahrscheinlichkeiten und die Gefahr von Zusammenstößen zwischen einem Fahrzeug, wie einem Personenkraftwagen, und einem Lebewesen, z. B. einem Haustier wie einer Katze oder wie einem Hund, z. B. einem Menschen wie einem Straßenarbeiter oder einem Fußgänger, reduzierbar sind, insbesondere durch aktives Warnen vor dem Unfallereignis.

Des Weiteren behandelt die vorliegende Erfindung ein Verfahren zur Vermeidung von Kollisionen zwischen einem Lebewesen, z. B. einem Menschen oder einem (Haus-)Tier, und einem motorisch angetriebenen Fahrzeug.

Das Kollisionswarngerät kann eingebettet in einem Kleidungsstück oder eingebettet in einem tragbaren Gegenstand als Teil dessen von einem Lebewesen getragen werden.

Mit anderen Worten, die vorliegende Erfindung behandelt ein Kollisionswarngerät nach dem Oberbegriff von Anspruch 1 sowie ein Verfahren zur Vermeidung von Kollisionen nach dem Oberbegriff von Anspruch 14. Außerdem wird eine geeignete Trageform eines entsprechenden Kollisionswarngeräts gem. Anspruch 16 vorgestellt.

### Technisches Gebiet

In vielen Regionen, insbesondere auch (West-) und (Zentral-)Europas, sind sehr viele Wege und Straßen vorrangig für die Nutzung durch Kraftfahrzeuge (PKWs, LKWs, Motorräder, Leichtkrafträder, elektrische angetriebene (Lasten-)Fahrräder und dergleichen) gestaltet. Um auf solchen Wegen und Straßen das Unfallrisiko für die Kraftfahrzeuge und für ihre Insassen bzw. Nutzer zu reduzieren, werden seit vielen Jahren Fahr(er)assistenzsysteme in den Kraftfahrzeugen integriert. In vielen Fällen sind diese Geräte vorrangig für die Vermeidung von Auffahrunfällen und von Zusammenstößen auf Straßen wie Autobahnen ausgelegt. Ihr Erkennungsschwerpunkt liegt folglich darin, in einem sich mit hoher Geschwindigkeit bewegenden Fahrzeug andere Fahrzeuge zu detektieren und aufgrund der Bewegung des anderen Fahrzeugs vorauszuberechnen, ob die Fahrzeuge zueinander eine solche Relativbewegungsänderung aufweisen, dass die Wahrscheinlichkeit eines Zusammenstoßes in naher Zukunft als hoch anzusehen ist.

Umsichtigere Kollisionsvermeidungssysteme, z. B. als Teil eines Fahr(er)assistenzsystems, sind nicht nur auf die Detektion anderer, häufig ähnlich schnell wie der Detektionsträger sich bewegender Fahrzeuge ausgelegt, sondern können noch weitere Unfallrisiken detektieren, z. B. Kollisionen mit Passanten oder mit anderen am Straßenverkehr teilnehmenden Lebewesen (z. B. Pferde, z. B. Hunde).

Verlassen die Fahrzeuge aber die üblichen Straßen, die häufig für den Vorrang der Kraftfahrzeuge konzipiert sind, z. B. Autobahnen und Schnellstraßen, so sind viele Fahr(er)assistenzsysteme von den räumlichen Gegebenheiten, z. B. in einem Wald mit seinen Wildtieren, mit seinen Spaziergängern und mit seinem Sportlern, überfordert. Dies führt zum Teil zu einem ignorierenden Umgang mit dem Fahr(er)assistenzsystem durch den Fahrer des Kraftfahrzeuges, Warnungen werden ignoriert, die Sensibilität der Fahr(er)assistenzsystems wird heruntergesetzt oder das Fahr(er)assistenzsystem wird komplett ausgeschaltet, weil die Warnungen von einem Fahrer nur noch als Belästigungen angesehen werden.

Obwohl viele Fahrzeuge mit Systemen ausgestattet sind, (auch) das Risiko für Kollisionen abseits der üblichen Straßen bis zu einem gewissen Punkt zu reduzieren, ereignen sich immer wieder schwere, sogar tödliche Unfälle zwischen Fahrzeug und einem Passanten wie einem Spaziergänger, zwischen Fahrzeug und einem (Einzel-)Sportler wie einem Dauerläufer, zwischen Fahrzeug und einem Tier, z. B. einem Haustier, und zwischen einem Fahrzeug und einem Freizeitsportler, z. B. einem Reiter auf seinem Pferd.

Es besteht eine Notwendigkeit nach besseren Kollisionsvermeidungen und Kollisionsvermeidungsgeräten, um die Schäden an und mit Lebewesen, wie Menschen und Tieren, zu reduzieren.

### Stand der Technik

Ein Augenmerk bei der Entwicklung von Kollisionsvermeidungssystemen liegt - laut mehreren (nachfolgend näher vorgestellten) Schutzrechten - in der Erfassung und der Detektion des Kollisionsobjekts sowie der Kommunikation zwischen dem mit einem Kollisionswarngerät ausgestatteten Fahrzeug und dem Kollisionsobjekt.

Dokumente, die sich mit der Detektion, insbesondere zur Kollisionsvermeidung, von Personen und/oder Tieren durch Kraftfahrzeuge beschäftigen, sind
- die DE 10 2018 206 037 A1 (Anmelderin: Robert Bosch GmbH; Offenlegungstag: 24.10.2019),
- die DE 11 2019 002 304 T5 (Anmelderin: Caterpillar Inc.; PCT-Veröffentlichungstag: 19.12.2019),
- die DE 10 2022 121 813 A1 (Anmelderin: Ford Global Technologies, LLC; Offenlegungstag: 29.12.2011) und
- die DE 10 2010 025 226 A1 (Anmelder: G. Luers; Offenlegungstag: 29.12.2011).

Diese zuvor aufgelisteten Dokumente beschäftigen sich u. a. mit Abstandsbestimmungen, die von einem Kraftfahrzeug zu einer Person oder zu einem Tier durchgeführt werden.

Die EP 2 824 009 A2 (Anmelderin: Robert Bosch GmbH; Veröffentlichungstag: 14.01.2015) spricht mögliche Sensorsysteme zur Überwachung des Nahbereichs zwischen einem Kraftfahrzeug und seinem Umfeld an.

Aus der DE 10 2014 213 066 A1 (Anmelderin: Continental Teves AG & Co. OHG; Offenlegungstag: 08.01.2015) ist ein Berufskleidungsstück für Straßenarbeiter bekannt, das für eine Kommunikation innerhalb eines mobilen Fahrzeug-Ad-hoc-Netzwerks gestaltet ist. Über eine Kommunikationsschnittstelle soll der Standort einer Person einem auf die Person hin sich zubewegenden Fahrzeug mitgeteilt werden. Auch soll zugleich die genaue Position des Fahrzeugs der Person mitgeteilt werden. Als eine Weiterbildung des in den ersten Absätzen der DE 10 2014 213 066 A1 beschriebenen Geräts wird ein solches Gerät erläutert, das eine Kombination aus einer Positionsinformation mit einer Zeitinformation bilden könne. Für die Positionsbestimmung soll ein globales Satellitennavigationssystem zum Einsatz kommen. Wie in Figur 2 der DE 10 2014 213 066 A1 dargestellt, ist das Kleidungsstück (z. B. eine Weste) mit einer Kollisionsbewertungseinrichtung ausgestattet, die aus den Positions- und Zeitdaten den Grad einer Kollisionsgefahr ermitteln kann und im Falle einer erhöhten Kollisionsgefahr über eine Warneinrichtung die Person auf eine Gefahr, die der fließende Verkehr verursacht, aufmerksam machen soll. Ein besonderes Augenmerk richtet sich hierbei auf den Energieverbrauch der Weste. Eine Möglichkeit, den Energieverbrauch zu kompensieren, bestünde in der elektrischen Aufladung der Weste über einen für induktive Energieübertragung geeigneten Kleiderbügel.

Die DE 20 2020 101 882 U1 (Inhaberin: comnovo GmbH; Bekanntmachungstag: 06.08.2020) beschäftigt sich mit einem Kleidungsstück mit einem Personensicherheitsmodul, das auch in Innenräumen eine exakte Abstandsermittlung zwischen Personen ermöglichen soll. Auf dieser Datenbasis sollen Warnungen abgegeben werden, wobei der Abstand möglichst exakt gemessen werden soll. Die Autoren der DE 20 2020 101 882 U1 unterscheiden zwischen einer Detektionsphase, in der Personensicherheitsmodule unterschiedlicher Personen einander erkennen können, und einer Messphase, in der mittels Laufzeitsignalen gegenseitig eine Abstandsbestimmung vorgenommen werden könne. Für die Verbesserung Kommunikation zwischen den Personensicherheitsmodulen sorge ein zyklisches Senden von Blinksignalen mit einer konstanten Blinkzeitwiederholrate. Die Abstandsbestimmung soll in der Messphase mehrfach durchgeführt werden, um möglichst örtlich genaue Abstandsänderungen zu ermitteln. Die DE 20 2020 101 882 U1 benennt verschiedene Sensoren, wie z. B. einen Radarsensor, die bei den Messungen zum Einsatz kommen können. Als Warnsignale (beim Unterschreiten von Mindestabständen) werden optische und akustische Signale sowie taktile Warnreize vorgeschlagen. Das Sicherheitsmodul könne in Form eines Mobiltelefons, in Form einer Warnweste, in Form eines Gürtels oder in Form eines Schuhs in Erscheinung treten.

In der DE 11 2015 007 071 T5 (Anmelderin: Ford Global Technologies, LLC; Veröffentlichungstag der PCT-Anmeldung: 04.05.2017) wird eine in einem Tier implantierte Vorrichtung beschrieben, die innerhalb eines Wirkungskreises, festgelegt durch einen maximal möglichen Abstand, ein Bluetooth-Signal an ein Fahrzeug senden kann. Die Vorrichtung soll auch unter der Haut einer Person implantierbar sein. Gem. einem in dem Schutzrecht DE 11 2015 007 071 T5 behandelten Ausführungsbeispiel soll ein Kommunikationsmanager mit einem Nähebestimmungsmodul in einem Fahrzeug einen Abstand zur implantierten Vorrichtung berechnen. Das in Figur 3 der DE 11 2015 007 071 T5 bildlich dargestellten Ausführungsbeispiel einer entsprechenden Vorrichtung umfasst ein Kommunikationsmodul, einen Prozessor und einen Speicher sowie einen Energiemanager. Außerdem soll eine entsprechende Vorrichtung auch jenes Nähebestimmungsmodul aufweisen, das den Abstand zu dem Fahrzeug bestimmt. Außerdem wird in dem Dokument erwähnt, dass die Detektion mehrerer Fahrzeuge innerhalb eines vorgegebenen Abstands mit einer beschreibungsgemäßen Vorrichtung vorgenommen werden könne. Ein sog. "aktiver Modus" der Vorrichtung soll (ein-)geschaltet werden, wenn ein Fahrzeug durch die Vorrichtung detektiert wird. In jenem (Aktiv-)Modus sollen ein Aktiv-Signal sowie verschiedene voreinstellbare Daten an das Fahrzeug gesendet werden. Die Daten sollen zum einen der Information des Fahrers des Fahrzeugs dienen. Die so ermittelten Informationen können aber auch über das Fahrzeug als "Relay-Station" zusammen mit einer GPS-Information des Fahrzeugs zur automatischen Information eines Besitzers eines entlaufenen Tieres dienen. Beispielhaft wird als ein Anwendungsfall in der DE 11 2015 007 071 T5 die Vermeidung einer Kollision zwischen einem Fahrzeug und einem Hund, also einem Haustier, angesprochen.

Die zuvor genannten Druckschriften gelten mit ihrer Benennung als vollumfänglich in vorliegende Erfindungsbeschreibung inkorporiert. Hierdurch soll vermieden werden, dass erneut und wiederholt allgemein bekannte Zusammenhänge zwischen sich bewegendem Objekt, Detektionsvorrichtung und zu schützendem Lebewesen erörtert werden müssen, sondern die Begriffe wie "Nahfelddetektion", "Kollisionswahrscheinlichkeit" und "Nahbereichsdetektor" sollen durch Verweis auf die Druckschriften als ebenfalls definiert für vorliegende Erfindung angesehen werden dürfen.

### Aufgabenstellung

Konträr zu sehr vielen Fahr(er)assistenzsystemen, die den Schutz des Kraftfahrzeugs und seiner Insassen in den Mittelpunkt ihrer Betrachtungen stellen, hat der Schutz von Lebewesen, die durch sich bewegende Fahrzeuge gefährdet werden und sind, für viele Entwickler von Kraftfahrzeugkomponente einen geringeren Stellenwert, obwohl diese Lebewesen einem deutlich höheren Risiko ausgesetzt sind, weil sie sich nicht in einem Fahrzeug mit extra vorgesehenen Knautschzonen befinden.

Es stellt sich also die Frage, wie solche Lebewesen, z. B. Personen oder z. B. Tiere wie Haustiere, vor sich heranbewegenden Gefahrenquellen wie Fahrzeugen geschützt werden können, deren Fahr(er)assistenzsysteme nur das eigene Fahrzeug im Fokus haben.

### Erfindungsbeschreibung

Die erfindungsgemäße Aufgabe wird durch ein Kollisionswarngerät nach Anspruch 1 gelöst, ein geeignetes Verfahren zur Kollisionsvermeidung lässt sich Anspruch 14 entnehmen. Tragbare Modelle eines Kollisionswarngeräts werden in Anspruch 16 behandelt. Vorteilhafte Weiterbildungen lassen sich den abhängigen Ansprüchen entnehmen.

Ein Kollisionswarngerät, das an einem Körper oder sogar in einem Körper getragen werden kann, hat die Aufgabe, durch ein rechtzeitiges Warnen vor einer drohenden Kollision den Träger des Kollisionswarngeräts aus der Gefahrenzone herauszubewegen, indem das das Kollisionswarngerät tragende Lebewesen, z. B. ein Haustier wie eine Katze oder ein Hund, in Reaktion auf Informationen, Signale oder Impulse des Kollisionswarngeräts eine Ortsveränderung vornimmt.

Besonders gefährdend sind sich fortbewegende Fahrzeuge, die z. B. durch schnell rollende Räder fortbewegt werden. Die kinetische Energie solcher Fahrzeuge ist so hoch, dass angefahrene Lebewesen häufig schwere oder sogar tödliche Verletzungen in Folge einer Kollision zwischen Fahrzeug und Lebewesen erleiden.

Mit anderen Worten, eine Kollision zwischen einem besonders schnell sich fortbewegenden Fahrzeug und einem (im Vergleich hierzu) deutlich langsameren Lebewesen resultieren in vielen Fällen in erheblichen Lebewesenschäden (oder Personenschäden), während viele modernere Fahrzeuge sogar derart entworfen bzw. konstruiert sind, dass solche Unfälle zwischen Kraftfahrzeug und Lebewesen an dem Kraftfahrzeug nur einen geringeren Schaden erzeugen, zumindest aber Passagiere des Fahrzeugs schützen.

Dabei ist es in vielen Konstellationen und Situationen von geringerer Wichtigkeit, wie sich das (schnell) fortbewegende Fahrzeug in größerer Entfernung vom Lebewesen verhält bzw. fortbewegt. Kritisch ist der Nahbereich. Folglich ist das Kollisionswarngerät mit einem Nahbereichsdetektor ausgestattet. Idealerweise sondert das Kollisionswarngerät weiter entfernte Objekte aus, die sich (noch) jenseits eines Risikobereichs befinden. Ein vorteilhaft gestaltetes Kollisionswarngerät kann räumlich differenzieren. Ein Kollisionswarngerät, das eine geringere Datenmenge verarbeiten muss, weil schon im Vorfeld bzw. im Umfeld Differenzierungen zwischen den Objekten vorgenommen werden, kann energiesparender, z. B. durch rechenleistungsärmere Prozessoren, gestaltet sein (im Vergleich zu einem Gerät, das sämtliche Umfeldinformationen verarbeitet).

Das Kollisionswarngerät ist in der Lage, in regelmäßigen Abständen das unmittelbare Umfeld um das Lebewesen herum bzw. um sich selbst herum zu überwachen, abzusuchen und nach bewegenden Objekten zu scannen. Bewegende Objekte können durch das Kollisionswarngerät erfasst werden. Hierbei findet vorteilhafterweise eine Umfelderfassung um das Lebewesen herum statt, z. B. eine Kompletterfassung, also eine Umfelderfassung des Raums, folglich eines räumlichen Umfelds über einen Winkelbereich von 360° um das Lebewesen herum.

Das Kollisionswarngerät hat - vorteilhafterweise - eine Analyseeinheit und eine Signalisierungseinrichtung.

Neben dem Nahbereichsdetektor bietet ein - Daten effektiv verarbeitendes - Kollisionswarngerät eine Einheit, die zur Analyse der ermittelten Daten, die der Nahbereichsdetektor erfasst hat, genutzt werden kann (Analyseeinheit). Kommt die Analyseeinheit zu dem Ergebnis, dass eine Kollision droht, so gibt die Analyseeinheit ein entsprechendes Signal an die Signalisierungseinrichtung, damit die Signalisierungseinrichtung das das Kollisionswarngerät tragende Lebewesen vor der drohenden Gefahr, z. B. vor der drohenden Kollision, warnen kann.

In der Regel befinden sich Lebewesen an Orten, an denen sich auch andere bewegende Objekte befinden. Das bedeutet, es gibt immer wieder Situationen, in denen ein sich bewegendes Objekt, nämlich das sich fortbewegende Fahrzeug, ein erhebliches Gefahrenpotential für das Lebewesen darstellt, während viele andere sich bewegende Objekte keinerlei Gefahrenquellen sind, im Gegensatz sogar einen Beitrag zur Erholung des Lebewesens liefern können (z. B. raschelndes Laub, z. B. im Wind sich bewegende Blumen, z. B. zwitschernde, von Ast zu Ast springende Singvögel).

Ein Kollisionswarngerät, das nicht differenzieren kann, ob eine Gefahr tatsächlich als Gefahr anzusehen ist oder ob ein sich bewegendes Objekt gar keine Gefahr darstellt (z. B. ein im Wind wehendes Tuch), führt schnell zur Gleichgültigkeit bei seinem Nutzer gegenüber Signalisierungen durch die Signalisierungseinrichtung. Die Wahrnehmung eines Lebewesens geringer belastend sind solche Kollisionswarngeräte, die vor wirklichen Gefahren warnen, während ungefährlichere Situationen, wie z. B. ein sich nähernder Ball (z. B. ein geschossener Fußball), tatsächlich als solche, nämlich als unproblematisch oder weniger gefährlich, ausgesondert wird.

Sich schnell fortbewegende Fahrzeuge können anhand einer Reihe von Kriterien identifiziert werden.

In der Regel haben Fahrzeuge mehr als ein Rad, also wenigstens zwei Räder, die durch eine entsprechend hohe Rotation für die Bewegung des Fahrzeugs sorgen.

Außerdem können sich Fahrzeuge üblicherweise nur auf einer gleichbleibenden Höhe über dem Boden in eine Vorwärts- oder Rückwärtsrichtung bewegen.

Die Bewegung eines Fahrzeugs ist häufig eine lineare Bewegung, genauer eine der Bodenkontur nachlaufende Bewegung.

Fahrzeuge werden üblicherweise aus vielen Metallen gefertigt, sodass anhand einer Metallkonzentration auf das Vorhandensein eines Fahrzeuges zurückgeschlossen werden kann.

Die Bewegung eines Fahrzeugs folgt einem bestimmten Bewegungsmuster. Anhand von Bild- und Mustererkennungen können Fahrzeuge identifiziert werden.

Demgegenüber bewegen sich Blätter im Wind häufig vor und zurück, sie bleiben aber im Nahbereich ihrer Ausgangslage. Folglich können sich bewegende Blätter (aufgrund ihrer Verteilungen gegenüber Kraftfahrzeugen) in einem - mit einer gewissen Intelligenz ausgestatteten - Kollisionswarngerät als keine Gefahr darstellend ausgesondert werden.

Bälle folgen einer parabelartigen Bahn, wenn diese von einem Fuß angestoßen worden sind. Das Bewegungsmuster eines Balles unterscheidet sich von der üblicherweise linearen Bewegung eines Kraftfahrzeuges.

Somit ist es möglich, ein Kriterium (oder auch mehrere Kriterien) auszuwerten (z. B. Art der Bewegung, z. B. Höhe der Bewegungsgeschwindigkeit, z. B. permanente Überschreitung einer Mindestgeschwindigkeit, z. B. Gleichmäßigkeit der Bewegungsgeschwindigkeit, z. B. Verzögerungen und/oder Beschleunigungen des Objekts, z. B. Masse des sich bewegenden Objekts, z. B. Bewegungsmuster des Objekts, z. B. Volumen des Objekts, z. B. (absolute) Höhe des Objekts, z. B. relative Abstände zu Bezugsformationen wie z B. einer Straßenoberfläche, z. B. Geräuschprofile) um zu bestimmen, ob ein sich dem Träger eines Kollisionswarngeräts näherndes Objekt ein gefahrbringendes Objekt ist, z. B. ein mit hoher Geschwindigkeit sich fortbewegendes Kraftfahrzeug.

Dank der Analyseeinheit lässt sich also bestimmen, ob das sich bewegende Objekt tatsächlich ein gefährdendes Objekt ist. Nur im Fall einer gewissen Gefährdung für das Lebewesen sorgt die Signalisierungseinrichtung für die Abgabe eines Signals, wobei das Signal sowohl dem Lebewesen als auch dem für das Führen des Fahrzeugs zuständigen Menschen zur Verfügung gestellt werden kann.

Mithilfe eines Nahbereichsdetektors kann ein Umfeld um das Lebewesen herum auf sich bewegende Objekte hin abgesucht werden. Die dabei ermittelten Daten werden einer Analyseeinheit zur Verfügung gestellt. Die Analyseeinheit analysiert, ob die sich bewegenden Objekte tatsächlich Objekte sind, die eine Gefährdung für das Lebewesen darstellen können. Wird ein Objekt als gefährdendes Objekt, weil es z. B. ein sich bewegendes Fahrzeug ist, identifiziert, so wird die Signalisierungseinrichtung veranlasst, ein Signal dem Lebewesen zu senden, sodass das Lebewesen eine Ortsveränderung in Reaktion auf das Signal (z. B. ein Ultraschallsignal für ein (trainiertes) Haustier) unternimmt.

Das Kollisionswarngerät wird besonders gerne als von einem Lebewesen (Mensch oder Tier) zu tragenden Zusatzgerät akzeptiert, wenn es ein nicht hervortretendes Gerät ist, z. B. weil es Teil eines Halsbands, Teil eines Halfters, Teil eines Sattels, Teil eines Zaumzeugs, Teil eines Armreifs, Teil eines Schutzhelms, Teil einer Schutzweste und/oder Teil eines Gürtels ist. Auch können mehrere Kleidungsstücke jeweils mit einem Kollisionswarngerät ausgestattet sein, z. B. sowohl ein Helm als auch eine Weste sowie ein die Weste am Körper fixierender Gürtel.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Geeignete Signale zur Signalisierung durch die Signalisierungseinrichtung sind optische Signale, akustische Signale und Funksignale. Besonders gut sind Signale bzw. Signalpakete/Signalkombinationen, die mehr als einen Sinneseindruck des zu warnenden Lebewesens ansprechen, z. B. taktile Signale neben akustischen und optischen Signalen. Viele (Haus-)Tiere reagieren auf Ultraschallsignale.

Als Nahbereichsdetektor kommt ein Radar (z. B. ein LIDAR) in Betracht. Als Nahbereichsdetektor können auch stereobildgebende Kameras verwendet werden.

Fahrzeuge lassen sich gut anhand von Dopplersignalen identifizieren.

Der Nutzen des Kollisionswarngeräts wird gesteigert, wenn das Kollisionswarngerät nicht auf eine GPS-Triangulation und/oder GPS-Trilateration angewiesen ist.

Sich in der Natur bewegende Lebewesen, z. B. fern von Ortschaften, befinden sich häufig außerhalb üblicher Abdeckungsbereiche von Datenkommunikationseinrichtungen, wie z. B. von Mobilfunkmasten (Handy-Masten). Idealerweise kann ein Kollisionswarngerät an Orten jenseits einer GPS-Triangulation, einer GPS-Trilateration und außerhalb von Datenverbindungsabdeckungsbereichen seine Warnfunktion entwickeln.

Die zuvor dargestellten Kombinationen und Ausführungsbeispiele lassen sich auch in zahlreichen weiteren Verbindungen und Kombinationen betrachten.

Das Kollisionswarngerät kann mit einem universellen Trageband ausgestattet sein, sodass dasselbe Kollisionswarngerät sowohl einem Tier als auch dem Eigentümer des Tieres wechselweise angelegt werden kann.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 ein Kollisionswarngerät im Zustand eines Selbsttests zeigt,
Figur 2 ein Kollisionswarngerät im Zustand "Detektion einer Gefahr" zeigt,
Figur 3 ein Kollisionswarngerät während der Phase zeigt, in der es gerade einem Haustier "Katze" angelegt wird,
Figur 4 in funktioneller Weise Kollisionswarngeräte mit zwei Haustieren zeigt,
Figur 5 ein implantiertes Kollisionswarngerät zeigt,
Figur 6 ein für einen Oberarm eines Menschen bestimmtes Kollisionswarngerät zeigt,
Figur 7 ein in Gestalt eines Gürtels realisiertes Kollisionswarngerät zeigt,
Figur 8 ein als Amulett gestaltetes Kollisionswarngerät zeigt,
Figur 9 ein als Teil einer Uhr realisiertes Kollisionswarngerät zeigt und
Figur 10 einen Bauarbeiter mit mehreren Kollisionswarngeräten zeigt.

### Figurenbeschreibung

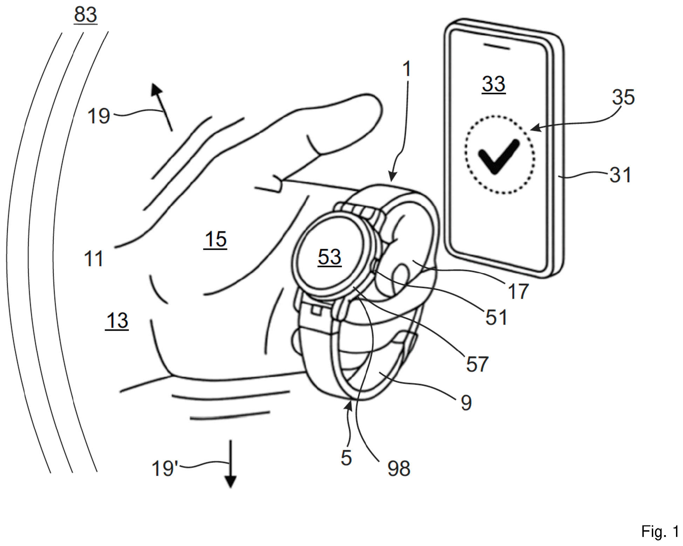

Figur 1 zeigt ein Kollisionswarngerät 1, dessen Funktionstüchtigkeit unter Nutzung eines mobilen Kommunikationsgeräts 31 zu testen ist bzw. testbar ist.

Das Kollisionswarngerät 1 umfasst ein Tragsystem 5, genauer ein Armband 9, durch das Finger, wie der Zeigefinger 17, einer Hand 15 als Teil des Körpers 13 eines Lebewesens 11 hindurchgesteckt werden kann.

Das Kollisionswarngerät 1 umfasst ein dual-funktionales Display 53 und eine Vibrationsmessvorrichtung 57, die ringartig um das Display 53 herum letzteres einfasst. Das Display 53 kann zur Anzeige von Meldungen und Warnungen genutzt werden. Zugleich kann durch das Display 53 ein Nahbereich 83 (vergleichbar mit einer Umfelderfassung des Nahbereichs 83 mithilfe einer Kamera) optisch analysiert werden.

Die Vibrationsmessvorrichtung 57 dient als zweite Informations- und Datenquelle. Die Vibrationsmessvorrichtung 57 misst Vibrationen, die auf das Kollisionswarngerät 1 einwirken. Außerdem hat das Kollisionswarngerät 1 einen Betätigungsknopf 51.

Durch ungewöhnliche Bewegungen 19, 19^{I}, also durch eine erste Bewegung 19 und eine zweite Bewegung 19^{I}, die deutlich von dem üblichen Bewegungsprofil eines Menschen 11 abweichen, kann das Kollisionswarngerät 1 in einen Testmodus versetzt werden. Durch Betätigen des Betätigungsknopfes 51 kann das Kollisionswarngerät 1 ebenfalls in den Testmodus versetzt werden.

Durch Betätigung des Betätigungsknopfes 51 kann das Kollisionswarngerät 1 in weitere Zustände versetzt werden. Mithilfe des Betätigungsknopfes 51 können weitere Betriebszustände des Kollisionswarngeräts 1 eingestellt werden.

Stellt das Kollisionswarngerät 1 fest (insbesondere wenn es sich im Testmodus befindet), dass alle Funktionen des Kollisionswarngerätes 1 einwandfrei funktionieren (im Sinne eines Selbsttests), so sendet das Kollisionswarngerät 1 ein Piktogramm 35 an das Display 33 des mobilen Kommunikationsgeräts 31, hier: ein positives Signal durch einen "Check-Haken" (bzw. ein "HakerI").

Auf der Unterseite des runden Teils des Kollisionswarngeräts 1, somit für eine Berührung mit der tragenden Haut des Körpers 13 hinter der Hand 15, also des Arms, vorgesehen, ist ein Vibrationserzeuger 98. Der Vibrationserzeuger 98 kann als Impulsgeber, ähnlich eines Massagegeräts, die Haut des Arms stimulieren, um auf diese Weise vor einer Gefahr zu warnen.

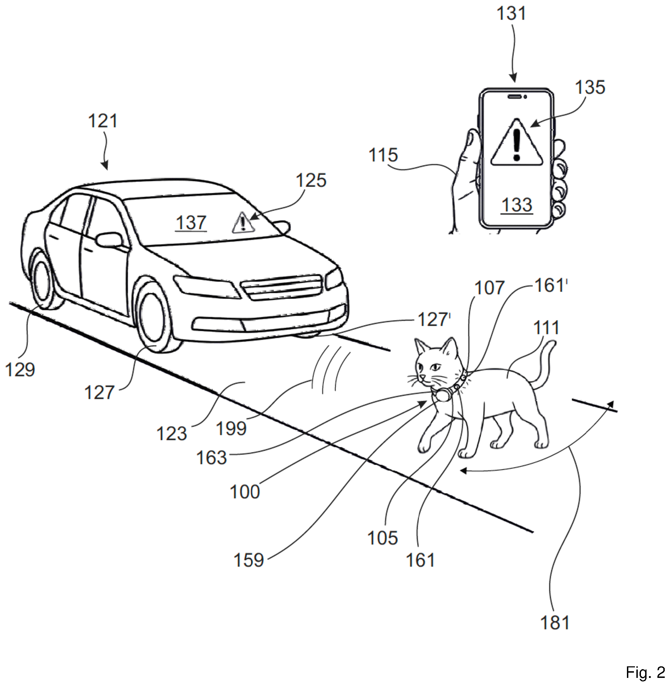

Figur 2 zeigt einen gefährdenden Zustand für das Lebewesen 111, das eine Katze ist, hervorgerufen von einem Fahrzeug 121 Die Katze bzw. das Lebewesen 111 ist mit dem Kollisionswarngerät 100 in Gestalt eines Halsbands 107 als Tragsystem 105 ausgestattet.

Das Lebewesen 111 überquert eine Straße 123, auf der sich auch das Fahrzeug 121 befindet. Das Fahrzeug 121 nähert sich infolge der Rotation seiner Räder 127, 127^{I}, 129 dem Lebewesen 111. Das Fahrzeug 121 lagert auf Rädern (siehe beispielhaft die Räder 127, 127I, 129), die sich schnell drehende 127, 127I, diese sind Vorderräder des Fahrzeugs 121, und Räder wie das Rad 129, das ein Hinterrad des Fahrzeugs 121 ist, sind. Die schnell rotierenden Räder 127, 127^{I}, 129 sorgen für eine entsprechend hohe Fahrgeschwindigkeit des Fahrzeugs 121.

Wird in einem solchen Fall das Lebewesen 111, die Katze, nicht rechtzeitig vor dem sich herannähernden Fahrzeug 121 gewarnt, so kann der sich ereignende Unfall zu tödlichen Verletzungen des Lebewesens 111 führen.

Um also eine, insbesondere tödliche, Kollision zwischen dem schnell fahrenden Fahrzeug 121 und dem Lebewesen 111 aus dem Weg gehen zu können, warnt das Kollisionswarngerät 100 in Gestalt eines Halsbands 107 seinen Träger, das Lebewesen 111, unter anderem mithilfe der Warnleuchten 161, 161^{I}, vor der herannahenden Gefahr. Das Tragsystem 105 in Gestalt des Halsbands 107 liegt so fest an dem Lebewesen 111 an, dass ein "Streifen durch das Unterholz" nicht zu einem Verlust des Kollisionswarngeräts 100 führen kann.

Das Kollisionswarngerät 100 umfasst eine Kamera 159, die eine Nahbereichskamera ist, und ist mit einer Analysesoftware ausgestattet, wodurch gefahrbringende Objekte im Umfeld 181 des Lebewesens 111 identifiziert bzw. ausgesondert bzw. als solche erkannt werden können.

Als ein weiterer Sensor zur Identifikation von fremden Objekten, die potentiell eine Gefahrenquelle darstellen, also zur Durchführung einer Objekterkennung 199, hat das Kollisionswarngerät ein Mikrophone 163. Das Mikrophone 163 nimmt einen Raumschall auf. Ein sich näherndes Fahrzeug, wie z. B. das Fahrzeug 121, sondert Fahr- und Motorgeräusche ab, die mit zunehmender Nähe in ihrer Stärke zunehmen.

Die Objekterkennung 199 kann auf einer Kombination aus Signalen aus mehreren Sensoren fußen. Die Kamera 159 liefert ein Bild, das durch einen Musteralgorithmus geschickt werden kann, um ein Fahrzeug, wie z. B. das Fahrzeug 121, zu identifizieren. Kommt bei einer Überlagerung mehrerer gleichartig aufgenommener Bilder der Musteralgorithmus zu dem Ergebnis, dass das Fahrzeug 121 sich nähert, so können die akustischen Signale des Mikrophones 163 den einzelnen Bildern aus der Kamera 159 zugeordnet werden. Ergibt sich ein Gleichlauf zwischen größer werdendem Fahrzeug 121 und lauter werdendem akustischem Signal aus dem Mikrophone 163, kann das Kollisionswarngerät 100 von einem sich nähernden Fahrzeug 121 ausgehen.

Das Kollisionswarngerät 100 (ähnlich wie die in den übrigen Figuren vorgestellten Kollisionswarngeräte 1, 200, 300, 300^{I}, 400, 500, 600, 700, 800, 900, 900^{I}) hat mehrere Messgeräte, Messsensoren und Signalaufnahmen, um eine Objekterkennung 199 durchzuführen.

Das Kollisionswarngerät 100 hat eine Funkverbindung. Die Funkverbindung kann eine Kommunikation mit einem mobilen Kommunikationsgerät 131 eines Menschen, zu erkennen an seiner Hand 115, aufbauen. Kommt das Kollisionswarngerät 100 zu der Schlussfolgerung, dass eine Kollision, z. B. mit dem Fahrzeug 121, droht, so sendet das Kollisionswarngerät 100 ein Warnsignal in Gestalt eines Signals zur Darstellung eines Piktogramms 135 an das mobile Kommunikationsgerät 131, sodass das warnende Piktogramm 135 auf dem Display 133 des mobilen Kommunikationsgeräts 131 dargestellt wird. Das Display 133 ist für eine Darstellung von informativen Piktogrammen, u. a. auch des Piktogramms 135, gestaltet. Eine weitere Warnung kann auch an die Insassen des Fahrzeugs 121 übermittelt werden, indem dem Fahrzeug 121 ein Piktogramm 125 zur Darstellung auf der Windschutzscheibe 137 des Fahrzeugs 121 übermittelt wird.

Das Kollisionswarngerät 100 informiert und warnt auf diese Weise mehrfach. Zuallererst warnt das Kollisionswarngerät 100 das Lebewesen 111, also seinen Träger. Es warnt (aber auch) Insassen in dem Fahrzeug 121. Es warnt einen Halter (zu sehen an seiner Hand 115) eines mobilen Kommunikationsgeräts 131. Die Kanäle zur Warnung variieren, sie hängen von dem jeweiligen Empfänger der Warninformation ab. Das Kollisionswarngerät 100 kann verschiedene Kanäle bedienen. Das Kollisionswarngerät 100 kann mehrere unterschiedliche Empfänger informieren. Jeder Kanal ist auf den Empfänger, z. B. auf das Lebewesen 111, abgestimmt. Somit können Tiere mit für Tiere verständlichen Signalen, z. B. durch Ultraschall, angesprochen werden. Einem Menschen wird eine Information auf seinem Kommunikationsgerät 131 zur Verfügung gestellt.

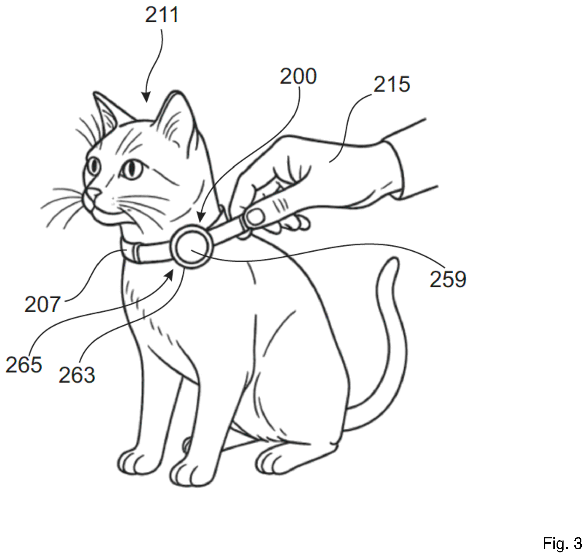

Die in Figur 3 gezeigte Situation mit einer Katze ist ein besonders leicht nachvollziehbares und somit eingängiges Beispiel für ein Lebewesen 211, das von seinem Kollisionswarngerät 200 profitiert, weil das Lebewesen 211 ein Halsband 207 trägt, dessen auf dem Halsband 207 vorhandene Nahbereichskamera 259 seitlich am Hals der Katze angebracht ist. Der Nahbereichsdetektor 265 des das Halsband 207 umfassende Kollisionswarngeräts 200 umfasst mehrere elektronische Messgeräte bzw. Messsensoren, unter anderem ein Mikrofon 263 und (besagte) Nahbereichskamera 259. Die Nahbereichskamera 259 sortiert durch ihre dem Kamerachip vorgelagerte Optik entferntere (mehr als 20 Meter entfernte) Objekte wie Kraftfahrzeuge (siehe z. B. das Kraftfahrzeug 121 in Figur 2) aus.

Anstelle der Nahbereichskamera 259 kann auch nur eine - mit elektronischer Bildberechnung ausgestattete, somit einfachere - Kamera verbaut sein. In einem solchen Fall bedarf es eines höheren Rechenaufwands einer Analyseeinheit eines mit dem Kollisionswarngerät 200 vergleichbaren Kollisionswarngeräts.

Der Besitzer der Katze (zu erkennen an seiner Hand 215) legt das Halsband 207 um den Hals des Lebewesens 211 in einer solchen Orientierung bzw. Position an, dass der Nahbereichsdetektor 265 sein Sichtfeld seitlich zu dem Lebewesen 211 Katze hat.

Dem geht die Überlegung voraus, dass viele Katzen durch Fahrzeuge (wie z. B. das in Figur 2 gezeigte Fahrzeug 121) auf Landes- und Bundesstraßen, also insbesondere auf zwischenörtlichen Straßen, angefahren werden und schwerst verletzt werden. Daher ist der größte Gefahrenbereich für das Lebewesen 211 der Gefahrenbereich seitlich zum Körper des Lebewesens 211. Viele Katzen werden - erfahrungsgemäß - von einer Seite her angefahren (oder sogar nach einer seitlichen Berührung überfahren).

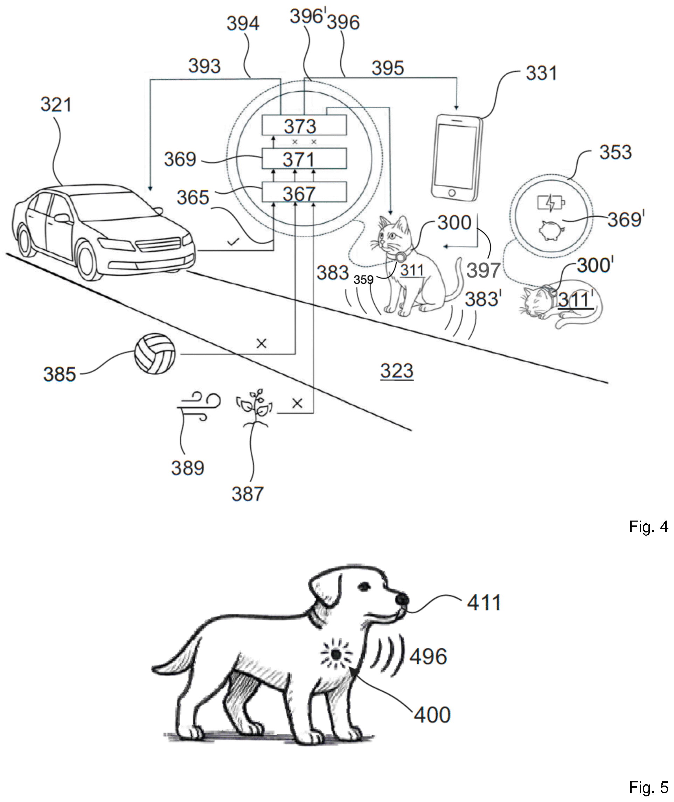

Figur 4 zeigt anhand von symbolhaften und schematischen Darstellungen eine geeignete Arbeitsweise und einen möglichen Funktionsablauf eines Kollisionswarngerätes 300, 300^{I}.

Das Kollisionswarngerät 300, das so an dem Lebewesen 311, an der Katze, angebracht ist, dass es nicht abstreifbar ist (nicht abstreifbarer Bandverschluss), ist in der Lage, verschiedene, sich bewegende Objekte auf ihr jeweiliges Gefahrenpotential hin zu analysieren.

Beispielhaft sind ein Ball 385, ein sich bewegender Busch 387 (Genauer gesagt: die Blätter der Pflanze bewegen sich:) und ein Fahrzeug 321 gezeigt. Die Bewegung der Blätter des Busches 387 wird durch einen Wind 389 hervorgerufen, der durch ein (schon in der Antike bekanntes) Windliniensymbol dargestellt ist. Fliegende Bälle, wie der Ball 385, mögen von einigen Lebewesen, wie der in der Figur 4 gezeigten Katze (siehe Lebewesen 311), als unangenehm und schmerzhaft wahrgenommen werden, es geht aber von einem Ball 385 häufig keine tödliche Gefahr aus. Anders ist die Situation bezüglich des Fahrzeugs 321, mit dem ein Zusammenstoß häufig tödlich endet.

Das Kollisionswarngerät 300 kontrolliert den Nahbereich 383, 383^{I} um das Lebewesen 311, somit wird auch die Straße 323 kontrolliert.

Die unterschiedlichen, sich bewegenden Objekte, wie das Fahrzeug 321, wie der Ball 385 und wie der Busch 387, werden von dem Nahbereichsdetektor 365 des Kollisionswarngerätes 300 erfasst. Der Nahbereichsdetektor 365 setzt sich aus Signalempfang 367 und vorgelagerten Detektionseinrichtungen (vgl. die Detektionseinrichtungen, z. B. die Kamera 159, z. B. die Vibrationsmessvorrichtung 57, z. B. dualfunktionales Display 53, der Figuren 1, 2 und 3) zusammen. Die von dem Signalempfang 367 erfassten Signale werden der Analyseeinheit 369 zur Verfügung gestellt, die einen Filter 371 umfasst. Der Filter sortiert die Signale des Signalempfangs 367 aus und stellt fest, dass nur das Fahrzeug 321 eine (erhebliche) Gefahrenquelle darstellt, d. h. von diesem eine Gefahr der Kollision mit eventuell tödlichem Ausgang droht. Somit signalisiert die Signalisierungseinrichtung 373 die drohende Gefahr durch das Fahrzeug 321. Hierfür hat das das Kollisionswarngerät 300 mehrere Signalisierungspfade 391, 393, 395. Über die Signalisierungspfade 391, 393, 395 werden Signale 392, 394, 394^{I}, 396 an und gegebenenfalls von signalempfangenden Geräten sowie an und von dem Lebewesen 311 und dem Kommunikationsgerät 331 übermittelt. Das Kommunikationsgerät 331 kann zudem Signale 394^{I} für den Signalisierungsweg 395 dem Kollisionswarngerät 300 zur Verfügung stellen.

Die Analyseeinheit 369^{I} ist darüber hinaus so ausgestattet, dass sie Ruhephasen eines Lebewesens, wie des Lebewesens 311^{I} feststellen kann. Das Kollisionswarngerät 300^{I} misst in regelmäßigem Abstand den Aktivitätsgrad des Lebewesens 311^{I}. Stellt die Analyseeinheit 369^{I} fest, dass das Lebewesen 311^{I}, eine Ruhephase durchlebt, so wird dieser Zustand auf dem Display 353 durch eindeutige Symbole, wie eine ruhende Batterie oder ein Sparsymbol, zum Ausdruck gebracht.

Figur 5 zeigt ein Lebewesen 411, das ein Hund ist. Das Kollisionswarngerät 400 ist dem Hund, z. B. im Brustbereich, unmittelbar unter der Haut implantiert. Auch sind die Funksignale 496 des Kollisionswarngerätes 400 zu sehen. Das Kollisionswarngerät 400 kann Signale dem Lebewesen 411 geben, z. B. erhöhte Temperaturbereiche unter der Haut erzeugen, woraufhin das Lebewesen 411 versteht, augenblicklich eine Ortsänderung vorzunehmen.

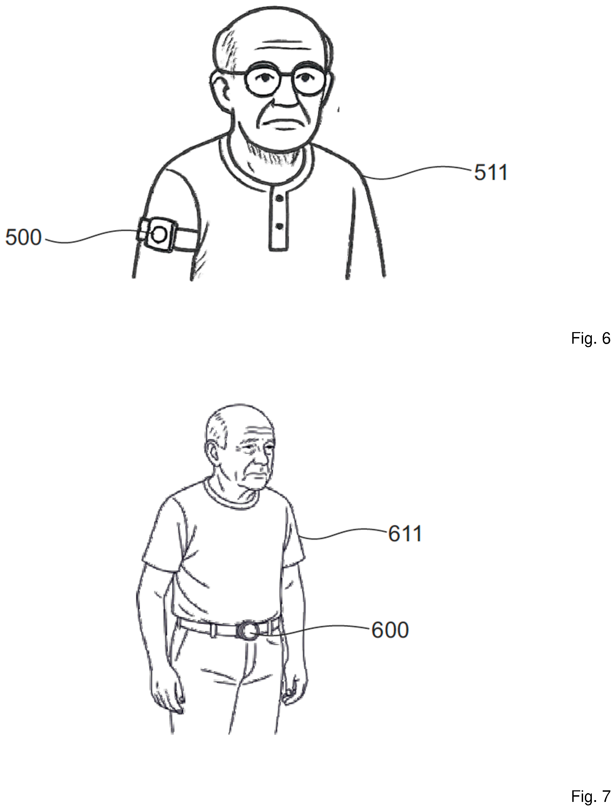

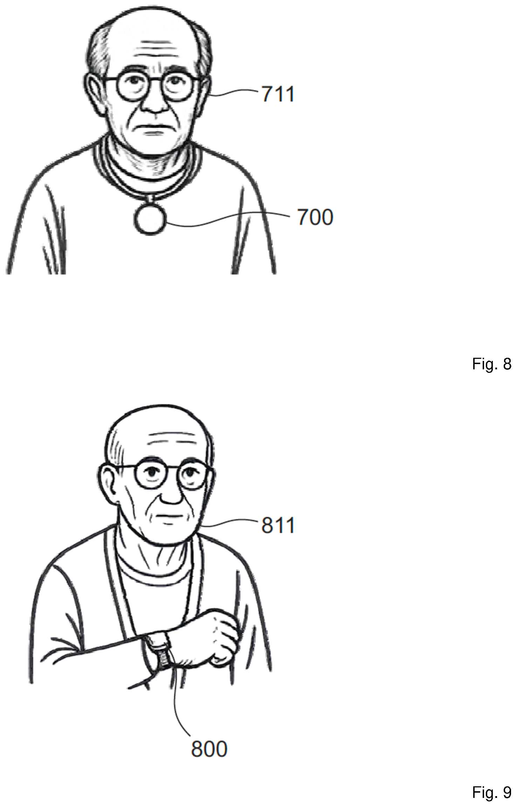

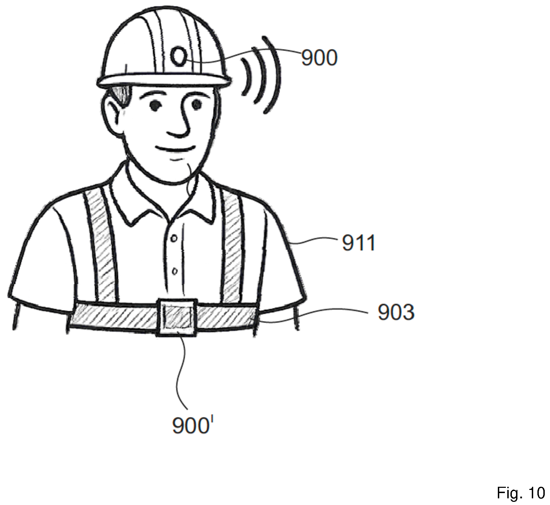

Weitere Kollisionswarngeräte 500, 600, 700, 800, 900, 900^{I} werden in den Figuren 6 bis 10 im Zusammenhang mit einer Person 511, 611, 711, 811, 911 gezeigt, die an verschiedenen Stellen des Körpers 513, 613, 713, 813, 913 getragen werden kann (als Armreif, als Oberarmstütze, als Helm, als Brosche, als ein Kleidungsstück 3 in Gestalt einer Weste, als Teil einer Brille usw.).

Die in den einzelnen Figuren gezeigten Ausgestaltungsmöglichkeiten lassen sich auch untereinander in beliebiger Form verbinden.

So ist es möglich, sowohl den Halter eines Tieres, z. B. eines Pferdes, mit einen Reithelm, in den ein Kollisionswarngerät integriert ist, auszustatten als auch das Sport- bzw. Haustier, z. B. mit einem Halfter mit einem integrierten Kollisionswarngerät.

### Bezugszeichenliste

- 1, 100, 200, 300, 300^{I}, 400, 500, 600, 700, 800, 900, 900^{I}: Kollisionswarngerät
- 903: Kleidungsstück
- 5, 105: Tragsystem
- 107, 207: Halsband
- 9: Armband
- 11, 111, 211, 311, 311^{I}, 411, 511, 611, 711, 811, 911: Lebewesen, insbesondere Mensch oder (Haus-)Tier
- 13, 513, 613, 713, 813, 913: Körper, insbesondere des Lebewesens
- 15, 115, 215: Hand
- 17: Finger, z. B. Zeigefinger oder z. B. Daumen
- 19: erste Bewegung, insbesondere ruckartige, einzelne Richtungen dominierende Bewegung
- 19^{I}: zweite Bewegung, insbesondere ruckartige, einzelne Richtungen dominierende Bewegung
- 121, 321: Fahrzeug
- 123, 323: Straße, insbesondere für das Fahrzeug
- 125: Piktogramm, insbesondere in die Windschutzscheibe des Fahrzeugs projiziert
- 127, 127^{I}: erstes Rad, insbesondere eines der Vorräder
- 129: zweites Rad, insbesondere eines der Hinterräder
- 31, 131, 331: mobiles Kommunikationsgerät, insbesondere Handy oder Tablet-PC
- 33, 133: Display des Kommunikationsgeräts
- 35, 135: Piktogramm, insbesondere auf dem Display des Kommunikationsgeräts
- 137: Windschutzscheibe, insbesondere des Fahrzeugs
- 51: Betätigungsknopf, insbesondere des Kollisionswarngeräts
- 53, 353: Display, insbesondere des Kollisionswarngeräts
- 57: Vibrationsmessvorrichtung
- 159, 259: Kamera, insbesondere Nahbereichskamera
- 161, 161^{I}: Warnleuchte, insbesondere des Kollisionswarngeräts, z. B. LEDs umfassende Leuchtkörper
- 163, 263: Mikrophone
- 265, 365: Nahbereichsdetektor
- 367: Signalempfang
- 369, 369^{I}: Analyseeinheit
- 371: Filter
- 373: Signalisierungseinrichtung
- 181: Umfeld, insbesondere des Lebewesens
- 83, 383, 383^{I}: Nahbereich
- 385: Ball
- 387: Busch, insbesondere mit sich bewegenden Blättern
- 389: Wind
- 391: erster Signalisierungspfad
- 392: erstes Signal
- 393: zweiter Signalisierungspfad
- 394, 394^{I}: zweites Signal
- 395: dritter Signalisierungspfad
- 396, 496: drittes Signal, insbesondere Funksignal
- 98: Vibrationserzeuger
- 199: Objekterkennung

## Patentansprüche

1. Kollisionswarngerät
zur Reduktion von Kollisionswahrscheinlichkeiten zwischen einem sich fortbewegenden Fahrzeug und einem Tier, insbesondere einer Katze oder einem Hund,
wobei das Kollisionswarngerät als ein in oder an einem Körper des Tieres von dem Tier tragbares Gerät ausgestaltet ist und einen Nahbereichsdetektor umfasst,
**dadurch gekennzeichnet, dass**
das Kollisionswarngerät
mittels des Nahbereichsdetektors in regelmäßigen Abständen ein Umfeld um das Tier herum auf sich bewegende Objekte hin absucht,
wobei der Nahbereichsdetektor als physikalischer Sensor ausgestaltet ist, der von externen Objekten zurückgestreute oder reflektierte Signale erfasst und eine Analyseeinheit sowie eine Signalisierungseinrichtung umfasst, wobei die Analyseeinheit dazu ausgebildet ist, anhand der erfassten Signale, zumindest ein Objekt als sich bewegendes Fahrzeug zu identifizieren,
und wobei die Analyseeinheit die Signalisierungseinrichtung veranlasst, ein erstes Warnsignal für das Tier auszugeben,
wobei das Kollisionswarngerät zur Durchführung der Warnfunktion weder auf GPS-Triangulation noch auf GPS-Trilateration und/oder eine externe Datenverbindung angewiesen ist,
und wobei optional ein zweites Signal an ein externes Kommunikationsgerät und/oder an Fahrzeuginsassen ausgegeben wird, ohne dass die Fahrzeugidentifikation auf einem Positionsaustausch mit dem Fahrzeug beruht.

2. Kollisionswarngerät nach Anspruch 1,
**dadurch gekennzeichnet, dass**
durch die Signalisierungseinrichtung ein Signal für das Tier und/oder für das Fahrzeug erzeugbar ist,
wenn sich das Kollisionswarngerät außerhalb einer GPS-Triangulation und/oder GPS-Trilateration befindet und/oder keine stabile Datenverbindung zu einem Kommunikationsfunkmast besteht.

3. Kollisionswarngerät nach einem der vorhergehenden Ansprüche,
**dadurch gekennzeichnet, dass**
die Signalisierungseinrichtung ein haptisches Signal, ein akustisches Signal und/oder eine Kombination mehrerer Signale erzeugt, die durch mehr als einen Sinneseindruck des Tieres wahrnehmbar sind, wobei die Signale als Warnsignale ausgestaltet sind, insbesondere als Ultraschallsignale.

4. Kollisionswarngerät nach einem der vorhergehenden Ansprüche,
**dadurch gekennzeichnet, dass**
der Nahbereichsdetektor ein Radar, eine optische Erfassung, eine elektromagnetische Erfassung, eine mit einem Dopplersignal arbeitende Detektorerfassung, einen Bewegungssensor und/oder eine akustische Erfassung umfasst.

5. Kollisionswarngerät nach einem der vorhergehenden Ansprüche,
**dadurch gekennzeichnet, dass**
es eine Nahbereichskamera umfasst.

6. Kollisionswarngerät nach einem der vorhergehenden Ansprüche,
**dadurch gekennzeichnet, dass**
die Analyseeinheit eine Logikeinheit umfasst, welche das Vorhandensein eines Objekts im Nahbereich anhand einer Schwellwertkontrolle bestimmt.

7. Kollisionswarngerät nach einem der vorhergehenden Ansprüche,
**dadurch gekennzeichnet, dass**
die Analyseeinheit eine Logikeinheit zur Bild- und Bewegungsmusteranalyse umfasst.

8. Kollisionswarngerät nach einem der vorhergehenden Ansprüche,
**dadurch gekennzeichnet, dass**
die Analyseeinheit einen Filter umfasst, der Gefahrenpotenziale unterhalb einer Mindeststufe ausfiltert.

9. Kollisionswarngerät nach einem der vorhergehenden Ansprüche,
**dadurch gekennzeichnet, dass**
zumindest die Analyseeinheit getaktet betrieben und in Energiesparphasen schaltbar ist.

10. Kollisionswarngerät nach einem der vorhergehenden Ansprüche,
**dadurch gekennzeichnet, dass**
das Kollisionswarngerät mit einem Selbsttestmodus sowie mit einer Bewegungsdetektion ausgestattet ist,
wobei das Kollisionswarngerät dazu eingerichtet ist,
im Selbsttestmodus die Funktionssicherheit der im Kollisionswarngerät integrierten Sensoren, insbesondere einer Kamera, eines Nahbereichsdetektors, eines Radars, einer optischen Erfassung, einer elektromagnetischen Erfassung, einer mit einem Dopplersignal arbeitenden Detektorerfassung sowie einer akustischen Erfassung,
und/oder der im Kollisionswarngerät integrierten Aktuatoren, insbesondere der Signalisierungseinrichtung, zu überprüfen.

11. Kollisionswarngerät nach einem der vorhergehenden Ansprüche,
**dadurch gekennzeichnet, dass**
ein weiterer Signalisierungspfad zur Übertragung eines Signals an einen Dritten vorgesehen ist.

12. Kollisionswarngerät nach einem der vorhergehenden Ansprüche,
**dadurch gekennzeichnet, dass**
es eine Schnittstelle zum externen Auslösen eines Signals aufweist.

13. Kollisionswarngerät nach einem der vorhergehenden Ansprüche,
**dadurch gekennzeichnet, dass**
es zur Signalisierung ein Gasgebläse, einen Vibrationserzeuger, LEDs, einen Buzzer und/oder einen Elektrosignalerzeuger umfasst.

14. Verfahren zur Reduktion von Kollisionswahrscheinlichkeiten zwischen einem sich fortbewegenden Fahrzeug und einem Tier, insbesondere unter Nutzung eines Kollisionswarngeräts nach einem der vorhergehenden Ansprüche,
**dadurch gekennzeichnet, dass**
mittels eines am Tier getragenen Nahbereichsdetektors ein Umfeld um das Tier herum physikalisch auf sich nähernde Objekte hin abgetastet wird, von externen Objekten zurückgestreute oder reflektierte Signale erfasst werden,
die erfassten Signale einer Analyseeinheit zur Verfügung gestellt werden, die Analyseeinheit anhand der erfassten physikalischen Signale zumindest ein Objekt als sich näherndes Fahrzeug identifiziert,
und in Reaktion hierauf unmittelbar ein Warnsignal für das Tier ausgegeben wird,
wobei die Identifikation ohne Positionsaustausch mit dem Fahrzeug erfolgt und das Verfahren weder auf GPS-Triangulation noch auf GPS-Trilateration noch auf eine externe Datenverbindung angewiesen ist.

15. Tiertragesystem, insbesondere ein Halsband, ein Halfter, ein Sattel oder ein Zaumzeug,
**dadurch gekennzeichnet, dass**
es mit einem Kollisionswarngerät nach einem der Ansprüche 1 bis 13 ausgestattet ist.
